# EUROPEAN PATENT APPLICATION

(11) **EP 1 769 980 A2**
(43) Date of publication of application: **04.04.2007**
(21) Application number: 06019273.9
(22) Date of filing: 14.09.2006
(51) Int. Cl.: B60R 21/272

(54) **Hybrid airbag inflator**

(30) Priority: 03.10.2005 US 241222
(71) Applicant: KEY SAFETY SYSTEMS, INC., Sterling Heights, MI 48314 (US)
(72) Inventor: Trevillyan, Dennis A., Plant City Florida 33566 (US); Kelley, Michael E., Valrico, Florida 33594 (US); Mulville, Michael F., Bartow Florida 33830 (US); Burroughs, Carter L., Lakeland Florida 33811 (US); Adams, John H., Lakeland Florida 33813 (US); Stembler, Edward R., Tampa Florida 33611-3347 (US)
(74) Representative: Gislon, Gabriele

(57) **Abstract**

A hybrid inflator (100) for inflating an airbag system has one or more heater assemblies (1, 2) with an ignition enhancer composition (25) contained in the heater assembly with bypass ports or openings (24) in direct communication with the inert gas (6). Upon ignition a portion of the combustion products from the burning ignition enhancer composition (25) bypasses the gas generant (27) to pre-heat the inert gas (6) prior to or simultaneously with a remaining portion of the combustion products from the burning ignition enhancer composition (25) igniting the gas generant (27) in the heater assembly (1, 2).

## Description

This invention relates to a hybrid type airbag inflator.

Hybrid type inflators used for inflating airbag systems contain an inert gas in the inflator that is heated by burning a gas generant within a heater assembly. The gas generant is ignited generally by firing a squib or igniter for initiating a rapid burning of the gas generant within a heater assembly; this gas generant heats the inert gas such that sufficient pressure can be achieved prior to releasing gas to inflate the airbag.

US 5 660 412 A discloses the use of a primary heater and a bypass heater to achieve more rapid heating of the pressurized fluid in a cylindrical hybrid gas generator. US 5 660 412 A discloses a first pyrotechnic material as a primary source of heating and a second pyrotechnic material having a faster rate of gas generation wherein portions of these products of combustion directly heat the inflation gas using a single initiator.

More typically multi stage hybrid inflators utilize two squibs or initiators to separately ignite two separate generants or pyrotechnic materials. This type of hybrid inflators are disclosed in US 2004/0100079, US 6 793 244 B1, US 2003/0001370 and US 6 488 310 B1. In each of these publications the gas generant is contained in a heater element that can be activated in multiple stages by using two separate squibs or initiators this sequencing of firing is made possible by time delay when one activates the initiators they can be activated singularly or in parallel or sequentially.

The use of two separate heater assemblies in opposite ends of the cylindrical inflator with the central exhaust has been taught in US 6 253 683 B1 and EP 1 405 775.

These prior art cylindrical inflators with a central exhaust did not employ enhancer bypass heaters to pre-heat the inert gas. A hybrid airbag inflator according to claim 1 provides faster heating of the inert gas, and therefore faster inflation of an airbag is provided by a hybrid airbag inflator.
Fig. 1 is a cross sectional view of a hybrid inflator having two gas heater assemblies according to a first embodiment of the present invention.
Fig. 2 is a cross sectional view of a heater assembly taken from Fig. 1.
Fig. 3 is a cross sectional view of a second embodiment of a heater assembly according to the present invention.
Fig. 4 is a cross sectional view of a third embodiment heater assembly according to the present invention.

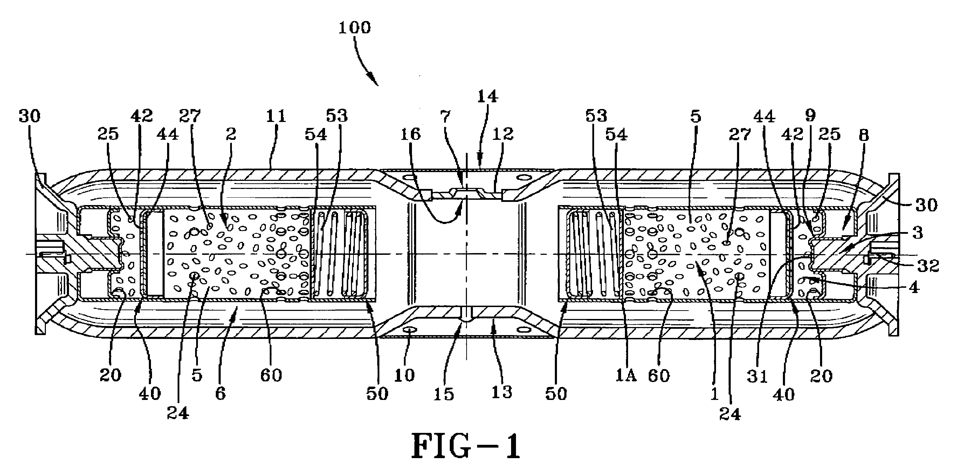

Fig. 1 shows a dual stage hybrid inflator 100 containing a primary stage heater assembly 1 and a secondary stage heater assembly 2 wherein either or both heater assemblies can utilize the high bypass ignition concept of the present invention. Typical inflators function by allowing an igniter to ignite an ignition enhancer composition. The products of combustion of the ignition enhancer composition ignite a gas generant that heats the stored gas. The stored gas is preferably an inert gas. An outlet burst disk is a rupturable member that ruptures when pressure in the inflator exceeds a specified value.

The bypass heater assemblies of the present invention reduce the time required to rupture the rupturable member 7 by using a portion of the ignition enhancer composition combustion products to pre-heat the inert gas 6.

The igniter 3 ignites the ignition enhancer composition 25 in the enhancer combustion chamber 4. The hot gases and particulate produced in the enhancer combustion chamber ignite the gas generant 27 located in the gas generant combustion chamber 5 and also a portion of the hot gasses and particulate produced by burning the ignition enhancer composition 25 enter the inflator housing mixing with the stored inert gas 6 directly through bypass openings 24 thereby heating the stored inert gas 6. The communication ports or openings 24 are sized and positioned to promote the flow of the products of combustion into the stored inert gas 6. The openings 24 may be positioned at any location along the heater housing 1A, 1B, 1C to control the relative amount of gas and particulates produced by burning the ignition enhancer composition bypassing the gas generant to that igniting the gas generant.

The inflator housing 11 is configured to allow attachment of the primary heater assembly 1 and the secondary heater assembly 2 at opposite ends of the tubular housing 11. The outlet burst disk 7 is a rupturable member attached to a washer shaped carrier 12 and is positioned in the center part of the tubular housing 11. The tubular shaped inflator housing 11 has a central portion 13 that is reduced in diameter to provide a manifold area and is covered by a gas distribution manifold 14 with exhaust ports 10. The reduction in diameter also reduces stress at the gas fill port 15 and the outlet burst disk flow passage 16.

In the current invention the need for adequate space is solved by placing the heater assemblies 1, 2 at both ends 30 of the inflator 100 and the outlet passage 16 and the fill port 15 in the sidewall near the center of the inflator housing 11. The problem of achieving acceptable time to first gas is solved through the use of a high bypass heater system, in this concept a larger than typical ignition enhancer composition load or charge 25 can be used. The ignition enhancer composition 25 burns quickly, in one to three milliseconds. Hot gases produced by burning the ignition enhancer composition 25 are directed to the gas generant 27 and a portion of the hot gasses produced by burning the ignition enhancer composition 25 goes into the gas storage bottle or inflator housing 11 through the bypass openings 24, and in this way the fast acting ignition enhancer composition both heats the stored gas 6 to increase the pressure to the rupturable outlet burst disk 7 and also ignites the gas generant 27. The arrangement avoids the problem of over igniting the gas generant 27 by bypassing a portion of the larger than usual ignition enhancer composition 25 while allowing a portion of the hot gasses produced by burning the ignition enhancer composition 25 to pass directly through the heater assembly to ignite the gas generant 27.

The hybrid inflator 100 has two heater assemblies 1, 2, each heater assembly can employ the bypass heater system of the present invention or alternatively one heater assembly may employ a high bypass system and the other may be a more conventional heater mechanism not employing the bypass system. The hybrid inflator 100 can have a single heater element heater assembly 1, in such a case the inflator housing 11 may be shortened substantially or the heater assembly 1 can be elongated in such a fashion to increase the amount of ignition enhancer composition 25 and gas generant 27 available for pre-heating and heating the inert gas 6 in the inflator 100.

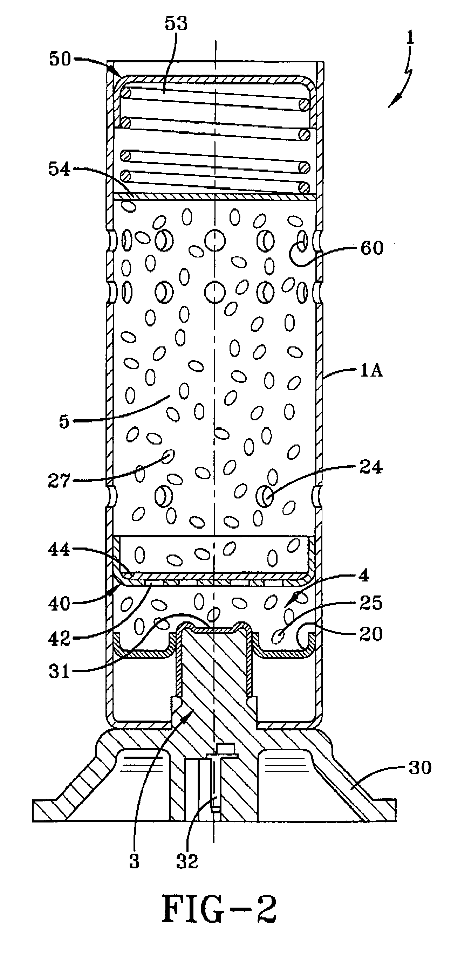

The following provides a description of several heater assemblies employing the heater bypass system according to the present invention. Each of the figures 2, 3 and 4 shows a different heater assembly that can be employed within the inflator housing 11. It must be understood that the reference numerals for similar components remain similar and those of alternative or substitute components are provided with distinct reference numerals. For ease of understanding the invention the gas generant 27 and the ignition enhancer composition 25 are not shown in entirety, but are represented by a few pellets. These pyrotechnic compositions are generally formed in either a disk type material that can fit within the heater housing or more preferably in pellet size combustion pyrotechnics; these pellet size pyrotechnics are sized sufficiently large to prevent them from passing through any of the openings 24, 60 within the heater assembly. As illustrated the heater assembly is shown is such that in each of the areas where a particular pyrotechnic composition is shown we have defined that area or volume as a chamber, these chambers it can be assumed are filled or at least partially filled with the pyrotechnic components described herein. One of ordinary skill in the art will appreciate the manner in which pyrotechnics are filled in such heater assemblies; however, they are not completely shown so that the functioning components of the structure of the inflator can be more easily shown.

In Fig. 2 the first heater assembly 1 is illustrated in cross sectional view. The heater assembly 1 has a heater housing 9A that is physically connected to an end cap 30 of the inflator housing 11. Located within the end cap 30 is an ignition means 3. The ignition means is an igniter 3 that is electrically connected at the opening 32 such that the igniter 3 can be fired allowing a small explosive charge to rupture an enclosure 31 allowing the explosive charge to ignite the ignition enhancer composition 25 contained within the enhancer combustion chamber 4. Once the ignition enhancer composition 25 within the enhancer combustion chamber 4 is ignited portions of the resulting gas and particulates enter into the gas generant combustion chamber 5 and a portion of the ignited enhancer composition 25 bypass out of the gas generant combustion chamber 5 and pass through openings 24 that enable the hot gas and particulates to pass directly into and pre-heat the inert gas 6. Hot gases and particulates from the enhancer combustion chamber portion 4 pass through one or more communication ports or openings 42 thereby igniting the gas generant 27. A portion of the gases from the enhancer combustion chamber 4 are generating pressure. Once the pressure is sufficiently large a barrier foil 44 shown adjacent to the bulkhead 40 is ruptured. When the barrier foil 44 ruptures, the one or more openings 42 in the bulkhead 40 are passed into the gas generant combustion chamber 5. As these hot gases and particulates enter the gas generant combustion chamber 5 a portion bypasses through the openings 24 and then the gas generant pellets 27 are then ignited shortly thereafter. As the gas generant pellets 27 are ignited a portion of the heated gases and particulates from the gas generant combustion chamber 5 pass through the plurality of openings 60 to heat the inert gas 6.

When the pyrotechnic compositions 25, 27 are first placed in the heater housing the end closures retain the pellets of ignition enhancer composition 25 such that the enhancer combustion chamber 4 is positioned by the bulkhead 20 that separates the empty end chamber portion 8 from the ignition enhancer composition filled enhancer combustion chamber 4. This locates the ignition enhancer composition 25 in close proximity to the igniter 3, the gas generant 27 and bulkhead 40. Once the enhancer combustion chamber 4 has been filled the bulkhead 40 separating the enhancer combustion chamber 4 from the gas generant combustion chamber 5 is inserted. Next the gas generant pellets 27 are loaded into the heater assembly 1. The end cap 50 is then pushed into the end of the heater housing 1 compressing a spring 53 and a pellet retaining plate 54 in close contact with the gas generant pellets 27.

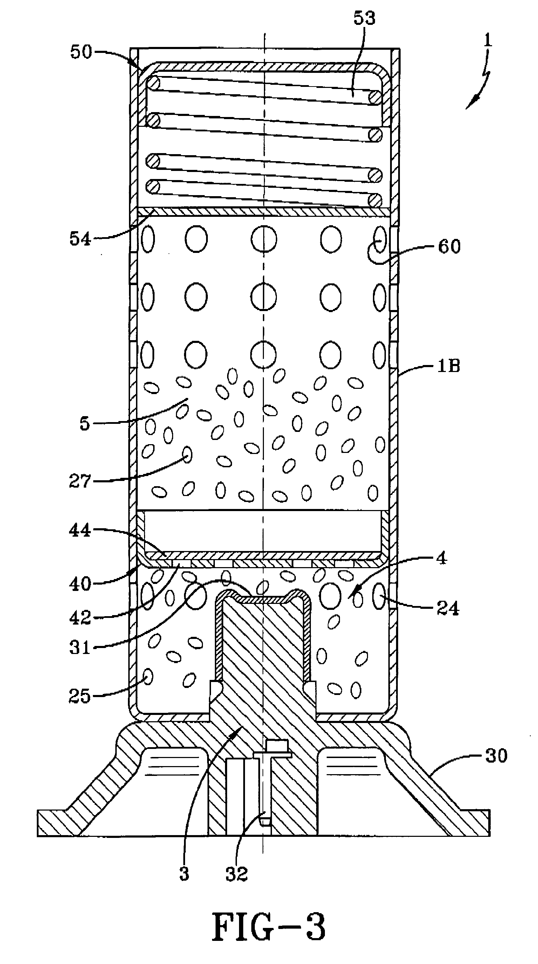

In Fig. 3 an alternative embodiment is shown wherein a second heater assembly 1 having the heater housing 1 B is illustrated. In this embodiment the enhancer combustion chamber 4 is a single enhancer combustion chamber 4 having a plurality of bypass openings 24. The enhancer combustion chamber 4 is filled with an ignition enhancer composition 25 and when the igniter 3 is fired an enclosure 31 ruptures such that the ignition enhancer composition 25 is ignited, as the ignition enhancer composition 25 ignites portions of the resultant gases and particulates are released through the bypass openings 24 and pre-heat the inert gas 6. As the pressure rises the rupturable member 44 at the bulkhead 40 ruptures. As the seal is opened hot gases and particulates pass through the one or more openings 42 and pass into the gas generant combustion chamber 5 heating the gas generant 27 such that it ignites. As it ignites portions of the hot gases and particulates produced by burning the gas generant 27 pass through a plurality of openings 60. The openings 60 are provided around the peripheral surface of the heater housing 1 B and as shown openings 60 are provided in three to five rows. These openings 60 permit the hot gases and particulates to escape or at least partially escape also pre- ... heating the inert gas 6. When a sufficient pressure is reached to permit the rupturable member 7 shown in Fig. 1 to rupture thereby filling the manifold area 15 in such a fashion that the hot gases can escape to fill the airbag. Optionally the enhancer combustion chamber 4 of the alternative embodiment can include a bulkhead 20 (Fig. 1).

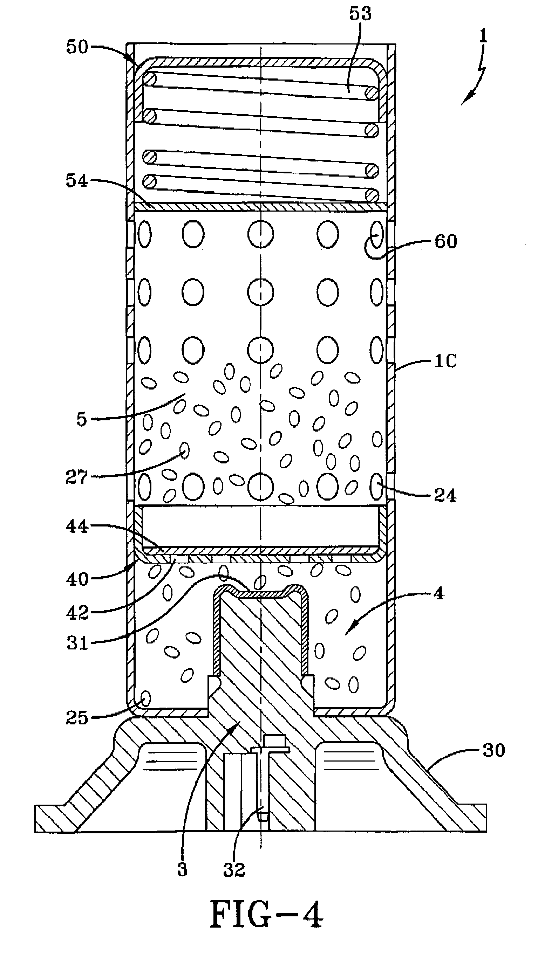

Fig. 4 shows a third embodiment of the invention. This embodiment is very similar to the first embodiment and the heater assembly 1 has a heater housing 1C the heater housing 1C also has a gas generant combustion chamber 5 for containing the gas generant 27 and an enhancer combustion chamber 4 for holding an ignition enhancer composition 25. Again when the igniter 3 is activated the enclosure 31 ruptures and hot materials ignite the ignition enhancer composition 25. As the pressure rises a rupturable burst disk 44 attached to the bulkhead 40 ruptures allowing the hot gases and particulates to pass through the one or more of the openings 42. As the gases pass through the one or more openings 42 they are permitted to pass through the plurality of openings 24 in close proximity to and adjacent to the bulkhead 40. These bypass openings 24 permit a portion of the hot gases and particulates to pass into the inert gas 6 and pre-heat the inert gas 6. As the remaining portion of the hot gases and particulate produced by burning the ignition enhancer composition 25 pass through the gas generant pellets 27 while a portion of the hot gases and particulates pass through the bypass openings 24, the remaining portion continues to push into the gas generant combustion chamber 5 thereby igniting the gas generant 27. As the gas generant 27 is ignited all or large portions of the hot gasses and particulates produced by burning the gas generant 27 are permitted to pass through the openings 60, enabling the gasses inside the inflator housing 11 to reach a specified pressure prior to rupturing the disk 7 and allowing the airbag to deploy. Unlike the first embodiment of Figs. 1 and 2, this third embodiment does not have a bulkhead 20 and thus the entire ignition enhancer combustion chamber 4 is available to hold the ignition enhancer composition 25.

In Figs. 1, 2 and 4, the openings 24 are sufficiently large and in close enough proximity to permit the gases and particulates produced by burning the ignition enhancer composition 25 ignited to be expelled through them while a remaining portion of the hot gases and particulates are used to ignite the gas generant 27. This can be accomplished by first providing the row of openings 24 in very close proximity to the one or more openings 42 and sufficiently spacing them from the openings 60 such that a sufficient amount of gases and particulates are free to bypass through the openings 24 prior to a remaining portion moving through the gas generant combustion chamber 5 igniting the gas generant 27. As the gas generant 27 is ignited the openings 60 come into play, allowing some of those gases and particulates if not all to pass into the inert gas 6 also providing a form of pre-heating prior permitting the gases to expel from the openings 24, 60 during the entire process.

Each of the embodiments shown in Figs. 2, 3 and 4 provides an efficient means to permit a portion of the enhancer hot gases and particulates to bypass and pre-heat the inert gas 6. Each of the systems is activated by the use a single igniter squib 3. This has the benefits of both simplifying the heater assembly 1, 2 and the mechanisms, but also simplifying the ignition process such that it is more reliable.

In each of the embodiments illustrated it should be noted that the openings 24 in either the enhancer combustion chamber 4 or the gas generant combustion chamber 5, in other words openings 24, 60 are in direct communication with the inert gas 6. Accordingly the inert gas 6 can pass through and is in direct communication with either the ignition enhancer composition 25 and the gas generant 27 as shown in Fig. 3 or the gas generant 27 in all the heater assemblies 1. In Figs. 1, 2 and 4 using a heater housing 1A, 1C the ignition enhancer composition e 25 is not in direct communication with the inert gas 6.

To summarize, a hybrid inflator 100 for inflating an airbag as shown in Figs. 1 and 2 has a inflator housing 11 filled with pressurized medium containing an inert gas 6 and one or more heaters 1, 2 internal and connected at an end of the inflator housing 11. At least one of the gas heaters 1, 2 has an outer shell formed by the heater housing having a plurality of heater holes 60, a gas generant combustion chamber 5 in which a gas generant 27 is stored, the gas generant combustion chamber 5 and the inflator housing 11 being in communication with each other through the plurality of holes 60, an ignition means 3 connected to the gas heater 1, 2 and located at an end of the inflator housing 11, and an enhancer combustion chamber 4, in which an ignition enhancer composition is stored. The enhancer combustion chamber 4 is located between the gas generant combustion chamber 5 and the ignition means 3 and is separated from the gas generant combustion chamber 5 by a bulkhead 40. The bulkhead 40 has one or more openings 42 leading to the gas generant combustion chamber 5.

In the first embodiment of the invention, a bulkhead 20 divides the enhancer combustion chamber 4 into a first chamber portion of a volume or size appropriate for the ignition enhancer composition 25 and a second empty chamber portion 8 occupying the end space. This bulkhead 20 is washer shaped and encircles the igniter 3.

An alternative second embodiment shown in Fig. 3 has a single enhancer combustion chamber 4 wherein an ignition enhancer composition 25 is stored. In this embodiment, when the ignition enhancer composition 25 is ignited by an igniter 3 it passes hot gases and particulates through a plurality of enhancer combustion chamber bypass openings 24 directly to the inflator housing 11 thereby pre-heating the inert gas 6 in the inflator housing 11 and the enhancer combustion chamber 4 passes ignited enhancer gases through the one or more first 42 in the bulkhead 40 and ignites the gas generant 27.

In the third embodiment shown in Fig. 4, the ignition enhancer composition 25 is stored in a single enhancer combustion chamber 4 that when ignited passes the ignited enhancer gases through the bulkheads 40 one or more openings 42 and in close proximity to the bulkhead 40 are a plurality of bypass openings 24 that permit a portion of the enhancer gases and particulates to escape directly into the inert gas 6 stored in the inflator housing 11 thereby pre-heating the inert gas 6 while the remaining portion of the ignited hot gases and particulates continues into the gas generant combustion chamber 5 to ignite the gas generant 27. In each case only a single ignition means 3 is connected to each gas heater and is used to start the entire gas heating and generation process.

## Claims

1. A hybrid inflator (100) comprising:
a inflator housing (11) containing an inert gas (6);
a heater assembly (1, 2) internal of and connected at an end of the inflator housing (11), the heater assembly (1, 2) including;
a heater housing (1A, 1B, 1C) having a plurality of heater holes (60) and a plurality of bypass openings (24) therethrough;
a gas generant combustion chamber (5) in which a gas generant (27) is stored, the gas generant combustion chamber (5) and the inflator housing (11) being in communication with each other through the heater holes (60) and the bypass openings (24) in the heater housing (1A, 1B, 1 C);
an igniter (3) connected to the heater assembly (1, 2) and located at an end of the inflator housing (11);
an enhancer combustion chamber (4) in which an ignition enhancer composition (25) is stored, the enhancer combustion chamber (4) being located between the gas generant combustion chamber (5) and the igniter (3), and separated from the gas generant combustion chamber (5) by a bulkhead (40), the bulkhead having one or more openings (42) therethrough; and
wherein the ignition enhancer composition (25) when ignited by the igniter (3) burns to produce hot gases that pass through the one or more openings (42) in the bulkhead (40) and a portion of the hot gases pass through the bypass openings (24) in the heater housing (1A, 1 B, 1 C) to heat the inert gas (6) in the inflator and a remaining portion of the hot gasses produced by burning the ignition enhancer composition (25) ignites the gas generant (27),

2. A hybrid inflator (100) according to claim 1 wherein the bypass openings (24) in the heater housing (1A, 1C) are located in the gas generant combustion chamber (5), the bulkhead (40) being located in close proximity to the bypass openings (24).

3. A hybrid inflator (100) according to claim 1 wherein the bypass openings (24) in the heater housing (1 B) are located in the ignition enhancer combustion chamber (4).

4. A hybrid inflator (100) according to any of claims 1 - 3 further comprising a rupturable member (44) attached to and covering the one or more openings (42) in the bulkhead (40), and wherein the rupturable member (44) is ruptured after a specified pressure is reached within the enhancer combustion chamber (4) upon ignition of the ignition enhancer composition (25).

5. A hybrid inflator (100) according to any of claims 1 - 4 wherein the inflator housing (11) has a second end and the inflator has two heater assemblies (1, 2) with one heater assembly at each end of the inflator housing (11).

6. A hybrid inflator (100) according to any of claims 1-5 wherein the inflator housing (11) is tubular shaped having a central portion (13) of a reduced diameter.

7. A hybrid inflator (100) according to claim 6 wherein the central portion (13) of the inflator housing (11) has a passage (16) therethrough, the passage (16) being sealed by a rupturable member (7).

8. A hybrid inflator (100) according to either of claims 5 or 6 wherein the central portion (13) is covered by a cylindrical gas distribution manifold (14), the distribution manifold (14) having a plurality of exhaust ports (10) therethrough.
